# EUROPÄISCHE PATENTSCHRIFT

(11) **EP 3 417 161 B1**
(45) Veröffentlichungstag und Bekanntmachung des Hinweises auf die Patenterteilung: **15.04.2020**
(21) Anmeldenummer: 17702095.5
(22) Anmeldetag: 30.01.2017
(51) Int. Cl.: F02D 41/00, B60W 50/02, F02D 41/22, B60W 20/00, B60W 10/02, B60W 10/06, B60W 10/08, F02D 41/14

(54) **VERFAHREN UND STEUERVORRICHTUNG ZUM ERKENNEN WÄHREND EINES BETRIEBS EINES HYBRIDFAHRZEUGS, OB IN EINER VERBRENNUNGSKRAFTMASCHINE DES HYBRIDFAHRZEUGS EINE VERBRENNUNG STATTFINDET**
METHOD AND CONTROL DEVICE FOR DETECTING, DURING THE OPERATION OF A HYBRID VEHICLE, WHETHER COMBUSTION IS TAKING PLACE IN AN INTERNAL COMBUSTION ENGINE OF THE HYBRID VEHICLE
PROCÉDÉ ET DISPOSITIF DE COMMANDE PERMETTANT DE REPÉRER, PENDANT LE FONCTIONNEMENT D'UN VÉHICULE HYBRIDE, SI UNE COMBUSTION A LIEU DANS UN MOTEUR À COMBUSTION INTERNE DU VÉHICULE HYBRIDE

(30) Priorität: 18.02.2016 DE 102016202556
(43) Veröffentlichungstag der Anmeldung: 26.12.2018
(73) Patentinhaber: Volkswagen Aktiengesellschaft, 38440 Wolfsburg (DE)
(72) Erfinder: MICHAU, Peter, 38104 Braunschweig (DE); FREIWALD, Grit, 38518 Gifhorn (DE); HOPFAUF, Juri, 31275 Lehrte (DE); WEISS, Norbert, 38173 Sickte (DE); PIASECKI, Christian, 38106 Braunschweig (DE)
(86) Internationale Anmeldenummer: PCT/EP2017/051958
(87) Internationale Veröffentlichungsnummer: WO 2017/140485

(56) Entgegenhaltungen:
- EP-A1- 0 437 057
- DE-A1- 10 229 535
- DE-A1-102005 012 835
- DE-A1-102012 216 351
- DE-A1-102012 219 466
- DE-A1-102015 111 196

## Beschreibung

Die Erfindung betrifft ein Verfahren und eine Steuervorrichtung zum Erkennen während eines Betriebs eines Hybridfahrzeugs, ob in einer Verbrennungskraftmaschine des Hybridfahrzeugs eine Verbrennung stattfindet.

Hybridfahrzeuge zeichnen sich durch zwei verschiedenartige Antriebssysteme aus, die situationsabhängig gleichzeitig, also hybridisch, oder unabhängig voneinander betrieben werden können. Häufig enthalten Hybridfahrzeuge eine Verbrennungskraftmaschine und einen Elektroantrieb als Antriebssysteme.

Falls die Verbrennungskraftmaschine während eines hybridischen Betriebs eines Hybridfahrzeugs kein oder nur ein nicht ausreichendes Moment stellen kann, z.B. im Fehlerfall, bei Falschbetankung oder dergleichen, kann es vorkommen, dass der Elektroantrieb die Verbrennungskraftmaschine "mitschleppt". Der Fahrer bekommt in diesem Fall ein Drehzahlsignal von der Verbrennungskraftmaschine angezeigt und geht davon aus, dass diese ordnungsgemäß funktioniert. Durch das Mitschleppen der Verbrennungskraftmaschine durch den Elektroantrieb wird die Batterie jedoch schnell leergefahren, was zu einem Liegenbleiben des Fahrzeugs führen kann. Falls während des unbeabsichtigten Mitschleppens der Verbrennungskraftmaschine Kraftstoff eingespritzt wird, wird dieser nicht verbrannt und kann sich im Abgastrakt, beispielsweise in einem Katalysator, ansammeln und diesen durch eine mögliche spätere Entzündung beschädigen.

Um eine Wahrscheinlichkeit für ein unbeabsichtigtes Mittschleppen der Verbrennungskraftmaschine durch den Elektroantrieb zu senken, sind verschiedene Ansätze bekannt. Zum Beispiel kann ein Abwürgen der Verbrennungskraftmaschine beispielsweise durch einen Eingriff in Verbrennungsparameter vermieden werden, wie in der EP 1 110 800 A2 beschrieben, oder gezielt kontrolliert werden, wie in der DE 10 2007 047 589 A1 beschrieben. Außerdem sind unterschiedliche Mechanismen bekannt, wie auf ein tatsächliches oder vermutetes Abwürgen der Verbrennungskraftmaschine reagiert werden kann, wie in der DE 10 2012 216 351 A1, der EP 2 685 429 A1 und der EP 1 077 149 A2 beschrieben.

Weiterhin existieren diverse Diagnosemöglichkeiten, die, beispielsweise auf Grundlage eines Ölstands wie in der EP 1 426 599 A1 beschrieben, Rückschlüsse auf eine fehlerhafte Verbrennung der Verbrennungskraftmaschine zulassen. Allerdings ist es mit den bekannten Diagnosemöglichkeiten nicht möglich, alle denkbaren Fehler der Verbrennung in der Verbrennungskraftmaschine, insbesondere den Fehler, dass in der Verbrennungskraftmaschine gar keine Verbrennung stattfindet bzw. dass in keinem der Zylinder der Verbrennungskraftmaschine eine Verbrennung stattfindet, zuverlässig zu erkennen.

Die DE 10 2012 216 351 A1 betrifft ein Verfahren zum Bestimmen, wann eine Kraftmaschine eines Hybridfahrzeugs abnormal abgestorben ist, wobei erkannt wird, ob eine Kupplung offensteht und weitere Anfangsbedingungen erfüllt sind.

Die EP 0 437 057 A1 betrifft ein Verfahren zum Bestimmen, ob in den einzelnen Zylindern eines Verbrennungsmotors eine Verbrennung stattfindet. Dies erfolgt während der Verbrennungsmotor unter Last steht.

Aufgabe der vorliegenden Erfindung ist es, ein Verfahren und eine Steuervorrichtung zum Erkennen während eines Betriebs eines Hybridfahrzeugs, ob in einer Verbrennungskraftmaschine des Hybridfahrzeugs eine Verbrennung stattfindet, bereitzustellen, die die oben genannten Nachteile wenigstens teilweise überwinden.

Diese Aufgabe wird durch das erfindungsgemäße Verfahren zum Erkennen während eines Betriebs eines Hybridfahrzeugs, ob in einer Verbrennungskraftmaschine des Hybridfahrzeugs eine Verbrennung stattfindet, nach Anspruch 1 und die Steuervorrichtung zum Erkennen während eines Betriebs eines Hybridfahrzeugs, ob in einer Verbrennungskraftmaschine des Hybridfahrzeugs eine Verbrennung stattfindet, nach Anspruch 9 gelöst.

Gemäß einem ersten Aspekt betrifft die Erfindung ein Verfahren zum Erkennen während eines Betriebs eines Hybridfahrzeugs, ob in einer Verbrennungskraftmaschine des Hybridfahrzeugs eine Verbrennung stattfindet, wobei zwischen der Verbrennungskraftmaschine und einer elektrischen Maschine zum Antreiben des Hybridfahrzeugs eine Trennkupplung vorgesehen ist, umfassend:
Öffnen der Trennkupplung zwischen der Verbrennungskraftmaschine und der elektrischen Maschine;
Erhalten eines Drehzahlsignals bei geöffneter Trennkupplung, das eine Drehzahl der Verbrennungskraftmaschine bei geöffneter Trennkupplung repräsentiert; und
Ermitteln auf Grundlage des Drehzahlsignals bei geöffneter Trennkupplung, ob in der Verbrennungskraftmaschine eine Verbrennung stattfindet.

Gemäß einem zweiten Aspekt betrifft die Erfindung eine Steuervorrichtung zum Erkennen während eines Betriebs eines Hybridfahrzeugs, ob in einer Verbrennungskraftmaschine des Hybridfahrzeugs eine Verbrennung stattfindet, wobei zwischen der Verbrennungskraftmaschine und einer elektrischen Maschine zum Antreiben des Hybridfahrzeugs eine Trennkupplung vorgesehen ist, wobei die Steuervorrichtung dazu ausgebildet ist, ein Verfahren nach dem ersten Aspekt auszuführen.

Weitere vorteilhafte Ausgestaltungen der Erfindung ergeben sich aus den Unteransprüchen und der folgenden Beschreibung bevorzugter Ausführungsbeispiele der vorliegenden Erfindung.

Die vorliegende Erfindung betrifft ein Verfahren zum Erkennen während eines Betriebs eines Hybridfahrzeugs, insbesondere während eines hybridischen Betriebs des Hybridfahrzeugs, ob in einer Verbrennungskraftmaschine des Hybridfahrzeugs, beispielsweise einem Ottomotor oder einem Dieselmotor, eine Verbrennung stattfindet. Das Hybridfahrzeug kann sich in Betrieb befinden, wenn es am Straßenverkehr beteiligt ist. Beispielsweise kann das Hybridfahrzeug nach einem Erststart der Verbrennungskraftmaschine in Betrieb sein, wobei der Erststart insbesondere ein auf eine Abstellphase folgender Start der Verbrennungskraftmaschine ist, wobei eine Zündung des Hybridfahrzeugs während der Abstellphase, die beispielsweise einige Minuten oder länger andauern kann, deaktiviert sein kann. Zum Beispiel kann sich das Hybridfahrzeug in Betrieb befinden, wenn sich das Hybridfahrzeug in einem Fahrbetrieb befindet, wobei der Fahrbetrieb neben Fahrphasen, in denen sich das Hybridfahrzeug mit einer Geschwindigkeit von mehr als 0km/h bewegt, auch durch den Straßenverkehr bedingte Haltephasen, beispielsweise an Kreuzungen oder aufgrund eines Hindernisses auf einer Straße, einschließen kann. Ein Hybridfahrzeug mit einem automatisierten Schaltgetriebe kann in Betrieb sein, wenn nach dem Erststart eine Fahrstufe eingelegt ist.

Zwischen der Verbrennungskraftmaschine und einer elektrischen Maschine zum Antreiben des Hybridfahrzeugs, beispielsweise einem Elektromotor, der zum Antreiben des Hybridfahrzeugs ausgebildet ist, ist eine Trennkupplung vorgesehen. Die Trennkupplung ist vorzugsweise dazu ausgebildet, die Verbrennungskraftmaschine und die elektrische Maschine in einem geschlossenen Zustand mechanisch miteinander zu koppeln und in einem geöffneten Zustand physisch vollständig voneinander zu trennen. Das Hybridfahrzeug weist somit einen sogenannten Verbrennungskraftmaschinen-Idle-Modus auf, in dem die Verbrennungskraftmaschine entkoppelt von der elektrischen Maschine in einem Leerlauf betrieben wird. Die Trennkupplung ist vorzugsweise steuerbar, beispielsweise über einen steuerbaren Elektromotor.

Gemäß dem erfindungsgemäßen Verfahren wird zum Erkennen, ob in der Verbrennungskraftmaschine des Hybridfahrzeugs eine Verbrennung stattfindet, die Trennkupplung zwischen der Verbrennungskraftmaschine und der elektrischen Maschine geöffnet und bei geöffneter Trennkupplung ein Drehzahlsignal erhalten, das eine Drehzahl der Verbrennungskraftmaschine bei geöffneter Trennkupplung repräsentiert. Das Erhalten des Drehzahlsignals kann das Empfangen des Drehzahlsignals beispielsweise von einer Messeinrichtung oder von einer Verarbeitungseinrichtung umfassen. Das Erhalten des Drehzahlsignals kann zusätzlich das Messen des Drehzahlsignals mittels der Messeinrichtung und/oder das Umwandeln von gemessenen Drehzahlsignalen mittels der Verarbeitungseinrichtung beispielsweise in einen oder mehrere Datenströme enthalten. Die Messeinrichtung kann ein Drehzahlsensor sein, beispielsweise ein magnetostatischer Drehzahlsensor. Der magnetostatische Drehzahlsensor kann zum Beispiel ein Geberrad mit einer Mehrzahl an magnetischen Segmenten oder Zähnen und einen Magnetfeldsensor, beispielsweise einen Hallsensor, aufweisen. Das Geberrad kann an einer beliebigen Position einer Kurbelwelle der Verbrennungskraftmaschine befestigt sein, beispielsweise zwischen zwei Zylindern der Verbrennungskraftmaschine oder zwischen der Verbrennungskraftmaschine und der Trennkupplung. Die Verarbeitungseinrichtung kann einen Mikroprozessor aufweisen. Das Drehzahlsignal bei geöffneter Trennkupplung kann ein Signal sein, das nur empfangen wird, wenn die Trennkupplung geöffnet ist. Alternativ kann das Drehzahlsignal bei geöffneter Trennkupplung ein Intervall eines Signals sein, wobei die Trennkupplung während des Intervalls geöffnet ist und das Signal kontinuierlich empfangen wird, unabhängig davon, ob die Trennkupplung geöffnet oder geschlossen ist.

Auf Grundlage des Drehzahlsignals bei geöffneter Trennkupplung wird dann ermittelt, ob in der Verbrennungskraftmaschine eine Verbrennung stattfindet. Insbesondere wird ermittelt, ob in einem oder in allen Zylindern der Verbrennungskraftmaschine eine Verbrennung stattfindet, oder ob in keinem der Zylinder der Verbrennungskraftmaschine eine Verbrennung stattfindet. Das Ermitteln, ob in der Verbrennungskraftmaschine eine Verbrennung stattfindet, kann beispielsweise auf Grundlage einer Leerlaufdrehzahl der Verbrennungskraftmaschine erfolgen, wie weiter unten beschrieben.

Mit Hilfe des erfindungsgemäßen Verfahrens kann zuverlässig vermieden werden, dass versehentlich erkannt wird, dass in der Verbrennungskraftmaschine keine Verbrennung stattfindet, obwohl kein Defekt der Verbrennungskraftmaschine vorliegt bzw. tatsächlich doch eine Verbrennung in der Verbrennungskraftmaschine stattfindet. Entsprechend kann verhindert werden, dass Ersatzmaßnahmen, die üblicherweise ausgelöst werden, wenn erkannt wird, dass in der Verbrennungskraftmaschine keine Verbrennung stattfindet, aufgrund einer fehlerhaften Erkennung, dass in der Verbrennungskraftmaschine keine Verbrennung stattfindet, unberechtigterweise ausgelöst werden. Die Ersatzmaßnahmen können Elektrisches Fahren insbesondere mit Leistungsbeschränkung, eine Aktivierung eines Electronic Power Control Systems (EPC-Systems), eine Aktivierung einer Motorkontrollleuchte (Malfunction Indication Lamp, MIL) oder andere Ersatzmaßnahmen umfassen.

Das Öffnen der Trennkupplung stellt einen Eingriff in die Fahrstrategie dar, da dadurch für die Zeit, die das Erhalten des Drehzahlsignals bei geöffneter Trennkupplung und das Ermitteln, ob in der Verbrennungskraftmaschine eine Verbrennung stattfindet, in Anspruch nehmen, von dem hybridischen Betrieb des Hybridfahrzeugs auf einen rein elektrischen Betrieb umgeschaltet wird. Das Öffnen der Trennkupplung, das Erhalten eines Drehzahlsignals bei geöffneter Trennkupplung und das Ermitteln auf Grundlage des Drehzahlsignals bei geöffneter Trennkupplung, ob in der Verbrennungskraftmaschine eine Verbrennung stattfindet, wird nachfolgend auch als aktive Diagnose, ob in der Verbrennungskraftmaschine eine Verbrennung stattfindet, bezeichnet.

Erfindungsgemäß umfasst das Verfahren zum Erkennen während des Betriebs des Hybridfahrzeugs, ob in der Verbrennungskraftmaschine eine Verbrennung stattfindet, weiterhin, dass bei geschlossener Trennkupplung analysiert wird, ob ein Indikator für eine fehlende Verbrennung in der Verbrennungskraftmaschine vorliegt. Wird dabei erkannt, dass der Indikator für eine fehlende Verbrennung vorliegt, wird die Trennkupplung geöffnet. Anderenfalls wird das Analysieren, ob ein Indikator für eine fehlende Verbrennung in der Verbrennungskraftmaschine vorliegt, wiederholt. Der Indikator für eine fehlende Verbrennung umfasst, dass bei einer passiven Diagnose, ob in der Verbrennungskraftmaschine eine Verbrennung stattfindet, erkannt wird, dass in der Verbrennungskraftmaschine keine Verbrennung stattfindet. Bei der passiven Diagnose, ob in der Verbrennungskraftmaschine eine Verbrennung stattfindet, findet vorzugsweise kein Eingriff in die Fahrstrategie statt.

Passive Diagnosen, ob in der Verbrennungskraftmaschine eine Verbrennung stattfindet, können, insbesondere wenn in keinem oder in allen Zylindern der Verbrennungskraftmaschine eine Verbrennung stattfindet, fehlerhaft sein. Vorzugsweise wird daher während des Betriebs des Hybridfahrzeugs kontinuierlich eine passive Diagnose, ob in der Verbrennungskraftmaschine eine Verbrennung stattfindet, durchgeführt und, sobald bei der passiven Diagnose festgestellt wird, dass in der Verbrennungskraftmaschine keine Verbrennung stattfindet, kann mit Hilfe der aktiven Diagnose, bei der auf Grundlage des Drehzahlsignals bei geöffneter Trennkupplung ermittelt wird, ob in der Verbrennungskraftmaschine eine Verbrennung stattfindet, die Richtigkeit der passiven Diagnose überprüft werden.

Dadurch dass die aktive Diagnose erst gestartet wird, nachdem bei der passiven Diagnose erkannt wird, dass keine Verbrennung in der Verbrennungskraftmaschine stattfindet, kann der Eingriff in die Fahrstrategie auf den Fall reduziert werden, dass bei der passiven Diagnose erkannt wird, dass vermutlich keine Verbrennung in der Verbrennungskraftmaschine stattfindet. Dadurch kann zuverlässig ausgeschlossen werden, dass unberechtigterweise Ersatzmaßnahmen für den Fall, dass in der Verbrennungskraftmaschine keine Verbrennung stattfindet, ausgelöst werden, obwohl kein Defekt der Verbrennungskraftmaschine vorliegt.

In manchen Ausführungsbeispielen kann das Analysieren, ob ein Indikator für eine fehlende Verbrennung in der Verbrennungskraftmaschine vorliegt, auf Grundlage eines Drehzahlsignals, insbesondere eines hochaufgelösten Drehzahlsignals, bei geschlossener Trennkupplung, das eine aktuelle Drehzahl der Verbrennungskraftmaschine bei geschlossener Trennkupplung repräsentiert, erfolgen. Zum Beispiel kann auf Grundlage eines segmentweisen Drehzahlanstiegs analysiert werden, ob ein Indikator für eine fehlende Verbrennung in der Verbrennungskraftmaschine vorliegt. Beispielsweise kann dabei ermittelt werden, ob ein Kurbelwellenwinkel, bei dem sich ein Zylinder der Verbrennungskraftmaschine an einer vorgegebenen Position, beispielsweise an seinem oberen Totpunkt, befindet, mit einem Kurbelwellenwinkel, bei dem das hochaufgelöste Drehzahlsignal ein Extremum, beispielsweise ein Minimum, aufweist, übereinstimmt. Bei einer Übereinstimmung kann bestimmt werden, dass wahrscheinlich keine Verbrennung in der Verbrennungskraftmaschine stattfindet.

Alternativ oder zusätzlich kann das Analysieren, ob ein Indikator für eine fehlende Verbrennung in der Verbrennungskraftmaschine vorliegt, auf Grundlage eines Lambda-Signal einer Lambdasonde bei geschlossener Trennkupplung, das einen aktuellen Lambdawert einer Lambdasonde des Hybridfahrzeugs bei geschlossener Trennkupplung repräsentiert, erfolgen. Dabei kann beispielsweise erkannt werden, ob der aktuelle Lambdawert trotz angepasster Verbrennungsparameter außerhalb eines vorgegebenen Lambdawert-Bereichs liegt, und, wenn der aktuelle Lambdawert außerhalb des vorgegebenen Lambdawert-Bereichs liegt, bestimmt werden, dass in der Verbrennungskraftmaschine wahrscheinlich keine Verbrennung stattfindet. Fällt der aktuelle Lambdawert hingegen in den vorgegebenen Lambdawert-Bereich, kann bestimmt werden, dass in der Verbrennungskraftmaschine eine Verbrennung stattfindet.

Alternativ oder zusätzlich kann das Analysieren, ob ein Indikator für eine fehlende Verbrennung in der Verbrennungskraftmaschine vorliegt, auf Grundlage eines Drehmomentsignals bei geschlossener Trennkupplung, das ein aktuelles Drehmoment der elektrischen Maschine repräsentiert, erfolgen. Beispielsweise kann das Analysieren, ob ein Indikator für eine fehlende Verbrennung vorliegt, das Durchführen einer Momenten-Drehzahl-Plausibilisierung umfassen. Dabei kann erkannt werden, ob das aktuelle Drehmoment der elektrischen Maschine bei geöffneter Fahrkupplung zwischen der Verbrennungskraftmaschine und der elektrischen Maschine einerseits und einer Antriebsachse des Hybridfahrzeugs andererseits ein erwartetes Drehmoment der elektrischen Maschine, das insbesondere von den Umgebungsbedingungen der elektrischen Maschine abhängt, übersteigt, und, wenn das aktuelle Drehmoment das erwartete Drehmoment übersteigt, kann ermittelt werden, dass in der Verbrennungskraftmaschine wahrscheinlich keine Verbrennung stattfindet. Falls das aktuelle Drehmoment hingegen gleich oder niedriger als das erwartete Drehmoment ist, kann ermittelt werden, dass in der Verbrennungskraftmaschine wahrscheinlich eine Verbrennung stattfindet.

Alternativ oder zusätzlich kann das Analysieren, ob ein Indikator für eine fehlende Verbrennung in der Verbrennungskraftmaschine vorliegt, auf Grundlage einer Motortemperatur, insbesondere eines Verlaufs der Motortemperatur, erfolgen. Beispielsweise kann bestimmt werden, dass in der Verbrennungskraftmaschine keine Verbrennung stattfindet, wenn erkannt wird, dass die Motortemperatur eine vorgegebene Maximaltemperatur überschreitet oder für einen vorgegebenen Zeitraum überschreitet.

Beispielsweise kann bestimmt werden, dass in der Verbrennungskraftmaschine keine Verbrennung stattfindet, wenn erkannt wird, dass ein segmentweiser Drehzahlanstieg in einem vorgegebenen Bereich liegt, als auch dass der aktuelle Lambdawert außerhalb des vorgegebenen Lambdawert-Bereichs liegt, als auch dass das aktuelle Drehmoment das erwartete Drehmoment übersteigt. Erst dann kann in diesem Beispiel die aktive Diagnose gestartet werden.

In manchen Ausführungsbeispielen kann die Trennkupplung geöffnet werden, wenn bei der passiven Diagnose über einen Verbrennungszyklus erkannt wird, dass der Indikator für eine fehlende Verbrennung in der Verbrennungskraftmaschine vorliegt. Alternativ kann die Trennkupplung geöffnet werden, wenn bei der passiven Diagnose über mehrere, beispielsweise drei, aufeinanderfolgende Verbrennungszyklen erkannt wird, dass der Indikator für eine fehlende Verbrennung in der Verbrennungskraftmaschine vorliegt. Dadurch kann die Wahrscheinlichkeit, dass bei der passiven Diagnose erkannt wird, dass in der Verbrennungskraftmaschine keine Verbrennung stattfindet, und tatsächlich ein Defekt der Verbrennungskraftmaschine vorliegt, gesteigert werden. Entsprechend kann ein Start der aktiven Diagnose und damit ein Eingriff in die Fahrstrategie verzögert werden.

Wenn bei der passiven Diagnose in einem Verbrennungszyklus, der auf einen Verbrennungszyklus folgt, in dem fehlerhaft erkannt wurde, dass in der Verbrennungskraftmaschine keine Verbrennung stattfindet, erkannt wird, dass in der Verbrennungskraftmaschine eine Verbrennung stattfindet, kann auf eine aktive Diagnose verzichtet werden und davon ausgegangen werden, dass kein Defekt der Verbrennungskraftmaschine vorliegt. Die Fahrstrategie kann so lange unberührt bleiben, bis eine Wahrscheinlichkeit, dass in der Verbrennungskraftmaschine keine Verbrennung stattfindet, größer als eine Grenzwahrscheinlichkeit ist. Erst dann kann die aktive Diagnose angestoßen werden. Dadurch kann der Fahrkomfort gesteigert und eine fehlerhafte Erkennung, dass keine Verbrennung stattfindet, vermieden werden.

In manchen Ausführungsbeispielen kann das Ermitteln auf Grundlage des Drehzahlsignals bei geöffneter Trennkupplung, ob in der Verbrennungskraftmaschine eine Verbrennung stattfindet, umfassen, dass die Drehzahl der Verbrennungskraftmaschine bei geöffneter Trennkupplung mit einer vorgegebenen Grenzdrehzahl verglichen wird und dass bestimmt wird, dass in der Verbrennungskraftmaschine keine Verbrennung stattfindet, wenn die Drehzahl der Verbrennungskraftmaschine kleiner als die vorgegebene Grenzdrehzahl ist. Die vorgegebene Grenzdrehzahl kann geringer als eine Leerlaufdrehzahl der Verbrennungskraftmaschine sein, zum Beispiel um mindestens 10% der Leerlaufdrehzahl kleiner als die Leerlaufdrehzahl der Verbrennungskraftmaschine.

In manchen Ausführungsbeispielen kann das Verfahren zum Erkennen während eines Betriebs eines Hybridfahrzeugs, ob in einer Verbrennungskraftmaschine des Hybridfahrzeugs eine Verbrennung stattfindet, weiterhin umfassen, dass die Verbrennungskraftmaschine nach dem Öffnen der Trennkupplung gestoppt wird und bei geöffneter Trennkupplung wiedergestartet wird. Beim Stoppen der Verbrennungskraftmaschine kann die Verbrennungskraftmaschine abgeschaltet werden, insbesondere kann eine Kraftstoffeinspritzung sowie ein Massenstrom durch die Verbrennungskraftmaschine unterbrochen werden und die Verbrennung in der Verbrennungskraftmaschine gestoppt werden. Beim Wiederstarten der Verbrennungskraftmaschine kann ein sogenannter Idle-Start durchgeführt werden, d.h. ein Start der Verbrennungskraftmaschine im Leerlauf bzw. bei geöffneter Trennkupplung. Nach dem Wiederstarten kann dann auf Grundlage des Drehzahlsignals bei geöffneter Trennkupplung ermittelt werden, ob die Drehzahl der Verbrennungskraftmaschine über die vorgegebene Grenzdrehzahl, insbesondere auf die Leerlaufdrehzahl der Verbrennungskraftmaschine, ansteigt. Wenn die Drehzahl nicht über die vorgegebene Grenzdrehzahl ansteigt, kann erkannt werden, dass in der Verbrennungskraftmaschine keine Verbrennung stattfindet und damit ein Defekt der Verbrennungskraftmaschine vorliegt. Anderenfalls kann erkannt werden, dass in der Verbrennungskraftmaschine eine Verbrennung stattfindet und kein Defekt vorliegt.

Alternativ kann auf einen Stopp der Verbrennungskraftmaschine verzichtet werden. Stattdessen kann nach dem Öffnen der Trennkupplung erkannt werden, ob die Drehzahl der Verbrennungskraftmaschine unter die vorgegebenen Grenzdrehzahl, insbesondere unter die Leerlaufdrehzahl der Verbrennungskraftmaschine, sinkt. Wenn die Drehzahl lediglich auf die Leerlaufdrehzahl sinkt, d.h. die Verbrennungskraftmaschine sich bei offener Trennkupplung selbst auf der Leerlaufdrehzahl hält oder sich wieder hochzieht, kann erkannt werden, dass in der Verbrennungskraftmaschine eine Verbrennung stattfindet und kein Defekt vorliegt. Wenn die Drehzahl unter die vorgegebene Grenzdrehzahl sinkt, insbesondere ein "Abwürgen" der Verbrennungskraftmaschine erkannt wird, kann erkannt werden, dass in der Verbrennungskraftmaschine keine Verbrennung stattfindet und damit ein Defekt der Verbrennungskraftmaschine vorliegt.

Auf Grundlage des Drehzahlsignals bei geöffneter Trennkupplung kann sehr zuverlässig erkannt werden, ob in der Verbrennungskraftmaschine eine Verbrennung stattfindet. Somit kann ermöglicht werden, dass Ersatzmaßnahmen infolge einer fehlenden Verbrennung nur ausgelöst werden, wenn tatsächlich ein Defekt der Verbrennungskraftmaschine vorliegt.

In manchen Ausführungsbeispielen kann bestimmt werden, dass in der Verbrennungskraftmaschine keine Verbrennung stattfindet, wenn die Drehzahl der Verbrennungskraftmaschine nach einer vorgegebenen Zeitspanne nach dem Öffnen der Trennkupplung kleiner als die vorgegebene Grenzdrehzahl ist. Die vorgegebene Zeitspanne kann von einer Drehzahl der Verbrennungskraftmaschine vor dem Öffnen der Trennkupplung oder, wenn die Verbrennungskraftmaschine nach dem Öffnen der Trennkupplung gestoppt und wiedergestartet wird, von einem Zeitpunkt des Wiederstarts abhängen. Die vorgegebene Zeitspanne kann in einem Bereich von 0,1s bis 30s, vorzugsweise von 0,5s bis 15s, liegen.

In manchen Ausführungsbeispielen kann, wenn bestimmt wird, dass in der Verbrennungskraftmaschine keine Verbrennung stattfindet, ein Fahrerinformationssignal erzeugt werden, das repräsentiert, dass in der Verbrennungskraftmaschine keine Verbrennung stattfindet. Beispielsweise kann infolge des Fahrerinformationssignals eine Anzeige, beispielsweise die Motorkontrolllampe, aktiviert werden. So kann dem Fahrer angezeigt werden, dass und gegebenenfalls welche Ersatzmaßnahmen aktiviert werden und/oder dass der Fahrer eine Werkstatt aufsuchen soll.

Alternativ oder zusätzlich können, wenn erkannt wird, dass in der Verbrennungskraftmaschine keine Verbrennung stattfindet, weitere Ersatzmaßnahmen ausgelöst werden. Beispielsweise kann das Hybridfahrzeug rein elektrisch betrieben werden, wobei insbesondere eine Leistungsbeschränkung erfolgt.

Alternativ oder zusätzlich kann, wenn erkannt wird, dass in der Verbrennungskraftmaschine keine Verbrennung stattfindet, ein Wiederstart der Verbrennungskraftmaschine durchgeführt werden und ermittelt werden, ob nach dem Wiederstart der Verbrennungskraftmaschine in der Verbrennungskraftmaschine eine Verbrennung stattfindet. Wenn die Drehzahl der Verbrennungskraftmaschine über die vorgegebene Grenzdrehzahl steigt, kann erkannt werden, dass eine Verbrennung stattfindet und kein Defekt vorliegt. Anderenfalls können Ersatzmaßnahmen, wie sie oben beschrieben sind, eingeleitet werden.

In manchen Ausführungsbeispielen kann, wenn erkannt wird, dass in der Verbrennungskraftmaschine eine Verbrennung stattfindet, die Trennkupplung geschlossen werden. Dazu kann die Verbrennungskraftmaschine vor dem Schließen der Trennkupplung auf eine Getriebedrehzahl synchronisiert und die Trennkupplung, sobald die Drehzahl der Verbrennungskraftmaschine der Getriebedrehzahl im Wesentlichen entspricht, geschlossen werden. Anschließend kann das Hybridfahrzeug im hybridischen Betrieb betrieben werden. Während dieses Betriebs kann wieder eine passive Diagnose durchgeführt werden, ob in der Verbrennungskraftmaschine eine Verbrennung stattfindet.

Das beschriebene Verfahren kann analog auf Fahrzeuge mit einer Verbrennungskraftmaschine und einer zusätzlichen Antriebsvorrichtung, die über eine Trennkupplung mit der Verbrennungskraftmaschine verbunden ist, angewendet werden. Die zusätzliche Antriebsvorrichtung kann beispielsweise ein Wasserstoffantrieb oder eine andere Antriebsvorrichtung sein.

Die vorliegende Erfindung betrifft weiterhin eine Steuervorrichtung zum Erkennen während eines Betriebs eines Hybridfahrzeugs, ob in einer Verbrennungskraftmaschine des Hybridfahrzeugs eine Verbrennung stattfindet, wobei zwischen der Verbrennungskraftmaschine und einer elektrischen Maschine zum Antreiben des Hybridfahrzeugs eine Trennkupplung vorgesehen ist. Die Steuervorrichtung ist dazu ausgebildet, die Trennkupplung zwischen der Verbrennungskraftmaschine und der elektrischen Maschine über ein Trennkupplungssteuersignal zu öffnen, bei geöffneter Trennkupplung ein Drehzahlsignal, das eine Drehzahl der Verbrennungskraftmaschine bei geöffneter Trennkupplung repräsentiert, zu erhalten und auf Grundlage des Drehzahlsignals bei geöffneter Trennkupplung zu ermitteln, ob in der Verbrennungskraftmaschine eine Verbrennung stattfindet. Die Steuervorrichtung ist insbesondere dazu ausgebildet, das oben beschriebene Verfahren zum Erkennen während des Betriebs des Hybridfahrzeugs, ob in der Verbrennungskraftmaschine des Hybridfahrzeugs eine Verbrennung stattfindet, auszuführen.

Die Steuervorrichtung kann einen Prozessor, beispielsweise einen Mikroprozessor, aufweisen, der dazu ausgebildet ist, das beschriebene Verfahren zum Erkennen während des Betriebs des Hybridfahrzeugs, ob in der Verbrennungskraftmaschine des Hybridfahrzeugs eine Verbrennung stattfindet, auszuführen. Die Steuervorrichtung kann weiterhin einen Datenspeicher aufweisen, in dem vorzugsweise ein Programm hinterlegt ist, das Anweisungen für den Prozessor enthält, um diesen entsprechend dem beschriebenen Verfahren zu steuern. In dem Datenspeicher können zudem vorgegebene Parameter zum Durchführen des beschriebenen Verfahrens hinterlegt sein, beispielsweise die vorgegebene Grenzdrehzahl, die vorgegebene Zeitspanne und/oder andere Parameter.

Die Steuervorrichtung kann eine Reihe von Signaleingängen und Signalausgängen aufweisen. Über die Signaleingänge können beispielsweise das Drehzahlsignal bei geöffneter Trennkupplung, das Drehzahlsignal bei geschlossener Trennkupplung, das Lambdasignal, das Drehmomentsignal und/oder andere Signale empfangen werden. Über die Signalausgänge kann insbesondere die Trennkupplung und gegebenenfalls das Getriebe des Kraftfahrzeugs gesteuert werden und/oder das Fahrerinformationssignal übertragen werden.

Die Steuervorrichtung kann in eine Motorsteuerung oder eine Getriebesteuerung des Kraftfahrzeugs integriert sein.

Die vorliegende Erfindung betrifft weiterhin ein Kraftfahrzeug, beispielsweise ein Hybridfahrzeug. Das Hybridfahrzeug weist eine Verbrennungskraftmaschine, eine elektrische Maschine zum Antreiben des Hybridfahrzeugs, die über eine Trennkupplung mit der Verbrennungskraftmaschine verbunden ist, eine Steuervorrichtung, wie sie in den voranstehenden Abschnitten beschrieben ist, und einen Drehzahlsensor auf. Beispielsweise kann das Hybridfahrzeug eine Full-Hybrid-Fahrzeug oder ein Plug-In-Hybrid-Fahrzeug sein. Der Drehzahlsensor kann wie oben mit Bezug auf das erfindungsgemäße Verfahren beschreiben ausgebildet sein.

Anstelle der elektrischen Maschine kann das Kraftfahrzeug einen Wasserstoffantrieb, eine weitere Verbrennungskraftmaschine oder einen anderen Antrieb aufweisen.

Ausführungsbeispiele der Erfindung werden nun beispielhaft und unter Bezugnahme auf die beigefügten Zeichnungen beschrieben. Es zeigen:
- Fig. 1: schematisch ein Ausführungsbeispiel eines Antriebsstrangs eines Hybridfahrzeugs;
- Fig. 2: schematisch ein Ausführungsbeispiel einer erfindungsgemäßen Steuervorrichtung;
- Fig. 3: ein Flussdiagramm eines ersten Ausführungsbeispiels eines erfindungsgemäßen Verfahrens zum Erkennen, ob in der Verbrennungskraftmaschine eine Verbrennung stattfindet; und
- Fig. 4: ein Flussdiagramm eines zweiten Ausführungsbeispiels eines erfindungsgemäßen Verfahrens zum Erkennen, ob in der Verbrennungskraftmaschine eine Verbrennung stattfindet.

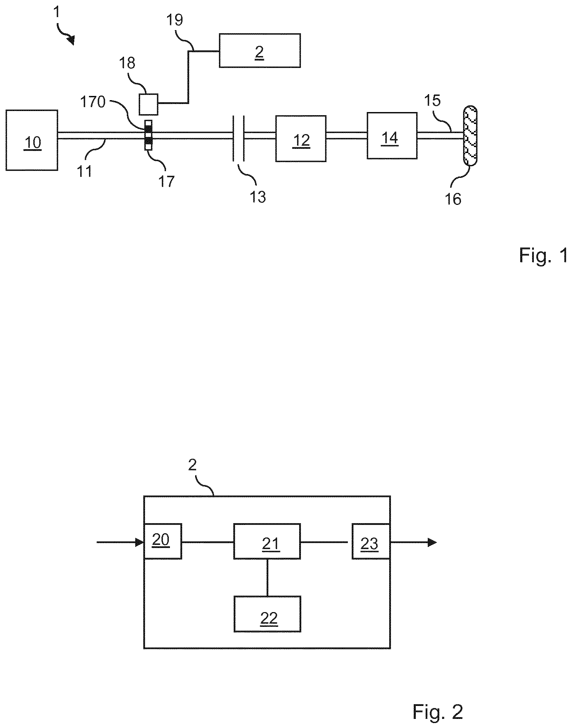

Ein Ausführungsbeispiel eines Antriebsstrangs 1 eines Hybridfahrzeugs ist in Fig. 1 gezeigt. Der Antriebsstrang 1 des Hybridfahrzeugs enthält eine Verbrennungskraftmaschine 10 mit einer Kurbelwelle 11, einen Elektroantrieb 12 und eine Trennkupplung 13, über die der Elektroantrieb 12 mit der Kurbelwelle 11 der Verbrennungskraftmaschine 10 gekoppelt ist. Die Verbrennungskraftmaschine 10 und der Elektroantrieb 12 sind über ein Getriebe 14 mit einer Antriebsachse 15, die mit Rädern 16 des Hybridfahrzeugs verbunden ist, gekoppelt. Das Getriebe 14 ist zum Beispiel ein Doppelkupplungsgetriebe.

Der Antriebsstrang 1 enthält weiterhin einen Drehzahlsensor, der ein Geberrad 17 mit 58 Zähnen 170 und einen Hallsensor 18 aufweist. Das Geberrad 17 ist an der Kurbelwelle 11 zwischen der Verbrennungskraftmaschine 10 und der Trennkupplung 13 befestigt. Der Hallsensor 18 tastet das Geberrad 17 während einer Rotation der Kurbelwelle 11 ab und erzeugt ein hochaufgelöstes, oszillierendes Drehzahlsignal. Das Drehzahlsignal des Hallsensors 18 wird über einen Datenbus 19 an eine Steuervorrichtung 2 geleitet.

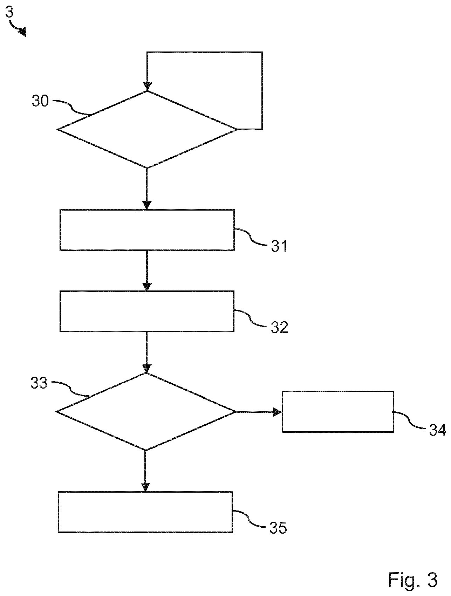

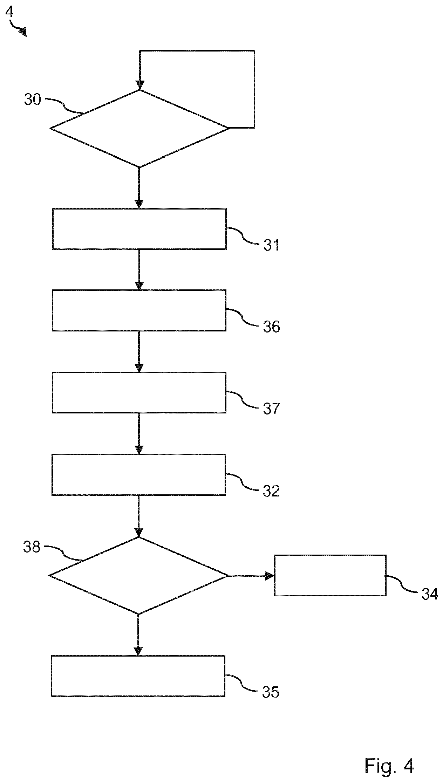

Die Steuervorrichtung 2 ist dazu ausgebildet, eines der mit Bezug auf Fig. 3 und Fig. 4 weiter unten beschriebenen Verfahren 3, 4 zum Erkennen während eines Betriebs des Hybridfahrzeugs, ob in der Verbrennungskraftmaschine des Hybridfahrzeugs eine Verbrennung stattfindet, auszuführen.

Die Steuervorrichtung 2 enthält, wie in Fig. 2 gezeigt, einen Signaleingang 20, der mit dem Datenbus 19 verbindbar ist und über den die Steuervorrichtung 2 das Drehzahlsignal empfangen kann. Die Steuervorrichtung 2 enthält weiter einen Prozessor 21, der mit dem Signaleingang 20 verbunden ist, einen Datenspeicher 22, der mit dem Prozessor 21 verbunden ist, und einen Signalausgang 23, der mit dem Prozessor 21 verbunden ist. In dem Datenspeicher 22 ist ein Programm hinterlegt, das Anweisungen für den Prozessor 21 enthält, um diesen entsprechend einem der Verfahren 3, 4 zu steuern. Der Prozessor 21 ist ein Mikroprozessor, der dazu ausgebildet ist, das Verfahren 3, 4 zum Erkennen während eines Betriebs des Hybridfahrzeugs, ob in einer Verbrennungskraftmaschine des Hybridfahrzeugs eine Verbrennung stattfindet, auszuführen. Der Signalausgang 23 ist mit einem Steuermotor oder mit einem Steller (nicht gezeigt) der Trennkupplung 13 verbindbar, um ein Steuersignal zum Öffnen oder Schließen der Trennkupplung zu übertragen, und mit einer Anzeige verbindbar, um ein Fahrerinformationssignal zu übertragen und dem Fahrer anzuzeigen, dass die Verbrennungskraftmaschine einen Defekt aufweist, da in der Verbrennungskraftmaschine keine Verbrennung stattfindet.

Fig. 3 zeigt ein Flussdiagramm eines ersten Ausführungsbeispiels eines erfindungsgemäßen Verfahrens 3 zum Erkennen, ob in der Verbrennungskraftmaschine eine Verbrennung stattfindet.

Bei 30 wird eine passive Diagnose durchgeführt, ob in der Verbrennungskraftmaschine eine Verbrennung stattfindet. Dabei wird beispielsweise bei geschlossener Trennkupplung von dem Drehzahlsensor ein hochaufgelöstes Drehzahlsignal, das die Drehzahl der Verbrennungskraftmaschine in Abhängigkeit eines Kurbelwellenwinkels repräsentiert, empfangen und anschließend ermittelt, ob ein Kurbelwellenwinkel, bei dem sich ein Zylinder der Verbrennungskraftmaschine an seinem oberen Totpunkt befindet, mit einem Kurbelwellenwinkel, bei dem das hochaufgelöste Drehzahlsignal ein Minimum aufweist, übereinstimmt. Wenn sich die Kurbelwellenwinkel unterscheiden, ergibt die passive Diagnose, dass wahrscheinlich eine Verbrennung in der Verbrennungskraftmaschine stattfindet. Wenn dagegen eine Übereinstimmung der Kurbelwellenwinkel vorliegt, ergibt die passive Diagnose, dass wahrscheinlich keine Verbrennung in der Verbrennungskraftmaschine stattfindet.

Wenn bei 30 erkannt wird, dass in der Verbrennungskraftmaschine eine Verbrennung stattfindet, wird die passive Diagnose bei 30 wiederholt.

Wenn bei 30 erkannt wird, dass in der Verbrennungskraftmaschine keine Verbrennung stattfindet, wird bei 31 die Trennkupplung zwischen der Verbrennungskraftmaschine und dem Elektroantrieb geöffnet. Dazu wird ein Steuersignal an den Steuermotor bzw. den Steller der Trennkupplung übertragen, das den Steuermotor bzw. den Steller zum Öffnen der Trennkupplung veranlasst.

Bei 32 wird bei geöffneter Trennkupplung ein Drehzahlsignal von dem Drehzahlsensor empfangen, das eine Drehzahl der Verbrennungskraftmaschine bei geöffneter Trennkupplung repräsentiert.

Bei 33 wird ermittelt, ob in der Verbrennungskraftmaschine eine Verbrennung stattfindet. Dazu wird nach dem Öffnen der Trennkupplung erkannt, ob die Drehzahl der Verbrennungskraftmaschine nach 3s ungefähr auf die Leerlaufdrehzahl der Verbrennungskraftmaschine oder ungefähr auf 0U/min absinkt. Wenn die Drehzahl lediglich auf die Leerlaufdrehzahl sinkt, wird ermittelt werden, dass in der Verbrennungskraftmaschine eine Verbrennung stattfindet. Wenn die Drehzahl dagegen auf ca. 0U/min absinkt, wird ermittelt, dass in der Verbrennungskraftmaschine keine Verbrennung stattfindet.

Wenn bei 33 ermittelt wird, dass in der Verbrennungskraftmaschine eine Verbrennung stattfindet, wird bei 34 die Trennkupplung geschlossen. Dazu wird die Verbrennungskraftmaschine vor dem Schließen der Trennkupplung auf eine Getriebedrehzahl synchronisiert und, sobald die Drehzahl der Verbrennungskraftmaschine der Getriebedrehzahl ungefähr entspricht, ein Steuersignal an den Steuermotor bzw. den Steller der Trennkupplung übertragen, das den Steuermotor bzw. den Steller zum Schließen der Trennkupplung veranlasst. Nach dem Schließen der Trennkupplung wird das Hybridfahrzeug wieder im hybridischen Betrieb betrieben.

Wenn bei 33 ermittelt wird, dass in der Verbrennungskraftmaschine keine Verbrennung stattfindet, werden bei 35 Ersatzmaßnahmen ausgelöst. Die Ersatzmaßnahmen umfassen eine Umstellung auf einen reinen elektrischen Betrieb des Hybridfahrzeugs mit Leistungsbeschränkung, um die im elektrischen Betrieb zurücklegbare Strecke zu verlängern, und ein Anzeigen einer Fahrerinformation, dass eine Werkstatt aufgesucht werden sollte. Zum Anzeigen der Fahrerinformation wird ein entsprechendes Fahrerinformationssignal an eine Anzeigeeinrichtung übertragen.

Fig. 4 zeigt ein zweites Ausführungsbeispiel eines Verfahren 4 zum Erkennen während des Betriebs des Hybridfahrzeugs, ob in der Verbrennungskraftmaschine eine Verbrennung stattfindet.

Bei 30 wird, wie mit Bezug auf Fig. 3 beschrieben, eine passive Diagnose durchgeführt, ob in der Verbrennungskraftmaschine eine Verbrennung stattfindet. Wenn bei 30 erkannt wird, dass in der Verbrennungskraftmaschine eine Verbrennung stattfindet, wird die passive Diagnose bei 30 wiederholt.

Wenn bei 30 erkannt wird, dass in der Verbrennungskraftmaschine keine Verbrennung stattfindet, wird bei 31, wie mit Bezug auf Fig. 3 beschrieben, die Trennkupplung zwischen der Verbrennungskraftmaschine und dem Elektroantrieb geöffnet.

Bei 36 wird die Verbrennungskraftmaschine gestoppt. Dazu wird die Verbrennungskraftmaschine abgeschaltet, indem eine Kraftstoffeinspritzung sowie ein Massenstrom durch die Verbrennungskraftmaschine unterbrochen werden.

Bei 37 wird die Verbrennungskraftmaschine wiedergestartet. Dabei wird ein Start der Verbrennungskraftmaschine im Leerlauf bei geöffneter Trennkupplung durchgeführt.

Bei 32 wird, wie mit Bezug auf Fig. 3 beschrieben, ein Drehzahlsignal bei geöffneter Trennkupplung empfangen.

Bei 38 wird ermittelt, ob in der Verbrennungskraftmaschine keine Verbrennung stattfindet. Dazu wird nach dem Wiederstarten der Verbrennungskraftmaschine ermittelt, ob die Drehzahl der Verbrennungskraftmaschine ungefähr auf die Leerlaufdrehzahl der Verbrennungskraftmaschine ansteigt. Wenn die Drehzahl nicht auf die Leerlaufdrehzahl ansteigt, wird ermittelt, dass in der Verbrennungskraftmaschine keine Verbrennung stattfindet. Anderenfalls, wenn die Drehzahl auf die Leerlaufdrehzahl ansteigt, wird ermittelt, dass in der Verbrennungskraftmaschine eine Verbrennung stattfindet.

Wenn bei 38 ermittelt wird, dass in der Verbrennungskraftmaschine eine Verbrennung stattfindet, wird bei 34, wie mit Bezug auf Fig. 3 beschrieben, die Trennkupplung geschlossen.

Wenn bei 38 ermittelt wird, dass in der Verbrennungskraftmaschine keine Verbrennung stattfindet, werden bei 35, wie mit Bezug auf Fig. 3 beschrieben, Ersatzmaßnehmen ausgelöst.

### Bezugszeichenliste

- 1: Antriebsstrang
- 10: Verbrennungskraftmaschine
- 11: Kurbelwelle
- 12: Elektroantrieb
- 13: Trennkupplung
- 14: Getriebe mit Fahrkupplung
- 15: Antriebsachse
- 16: Rad
- 17: Geberrad
- 170: Zähne des Geberrads
- 18: Hallsensor
- 19: Datenbus
- 2: Steuervorrichtung
- 20: Signaleingang
- 21: Prozessor
- 22: Datenspeicher
- 23: Signalausgang
- 3, 4: Verfahren zum Erkennen, ob in der Verbrennungskraftmaschine eine Verbrennung stattfindet
- 30: Durchführen einer passiven Diagnose, ob die Verbrennungskraftmaschine eine Verbrennung stattfindet
- 31: Öffnen der Trennkupplung
- 32: Empfangen eines Drehzahlsignals bei geöffneter Trennkupplung
- 33: Ermitteln, ob in der Verbrennungskraftmaschine eine Verbrennung stattfindet
- 34: Schließen der Trennkupplung
- 35: Auslösen von Ersatzmaßnehmen
- 36: Stoppen der Verbrennungskraftmaschine
- 37: Wiederstarten der Verbrennungskraftmaschine
- 38: Ermitteln, ob in der Verbrennungskraftmaschine eine Verbrennung stattfindet

## Patentansprüche

1. Verfahren zum Erkennen während eines Betriebs eines Hybridfahrzeugs, ob in einer Verbrennungskraftmaschine (10) des Hybridfahrzeugs eine Verbrennung stattfindet, wobei zwischen der Verbrennungskraftmaschine (10) und einer elektrischen Maschine (12) zum Antreiben des Hybridfahrzeugs eine Trennkupplung (13) vorgesehen ist, umfassend:
Erkennen bei einer passiven Diagnose bei geschlossener Trennkupplung (13), ob in der Verbrennungskraftmaschine eine Verbrennung stattfindet;
Öffnen (31) der Trennkupplung zwischen der Verbrennungskraftmaschine (10) und der elektrischen Maschine (12), wenn bei der passiven Diagnose erkannt wird, dass in der Verbrennungskraftmaschine keine Verbrennung stattfindet;
Erhalten (32) eines Drehzahlsignals bei geöffneter Trennkupplung (13), das eine Drehzahl der Verbrennungskraftmaschine (10) bei geöffneter Trennkupplung (13) repräsentiert; und
Ermitteln (33, 38) auf Grundlage des Drehzahlsignals bei geöffneter Trennkupplung (13), ob in der Verbrennungskraftmaschine (10) eine Verbrennung stattfindet,

2. Verfahren nach Anspruch 1, wobei das Erkennen bei der passiven Diagnose bei geschlossener Trennkupplung (13), ob in der Verbrennungskraftmaschine eine Verbrennung stattfindet, auf Grundlage wenigstens eines der folgenden Signale erfolgt:
auf Grundlage eines Drehzahlsignals bei geschlossener Trennkupplung (13), das eine Drehzahl der Verbrennungskraftmaschine (10) bei geschlossener Trennkupplung 13 repräsentiert,
auf Grundlage eines Lambda-Signal einer Lambdasonde bei geschlossener Trennkupplung (13), das einen Lambdawert einer Lambdasonde des Hybridfahrzeugs bei geschlossener Trennkupplung (13) repräsentiert,
auf Grundlage eines Drehmomentsignals bei geschlossener Trennkupplung (13), das ein Drehmoment der elektrischen Maschine (12) repräsentiert, und/oder
auf Grundlage einer Motortemperatur.

3. Verfahren nach Anspruch 1 oder 2, wobei die Trennkupplung (13) geöffnet wird (31), wenn über einen oder mehrere aufeinanderfolgende Verbrennungszyklen erkannt wird, dass der Indikator für eine fehlende Verbrennung in der Verbrennungskraftmaschine (10) vorliegt.

4. Verfahren nach einem der vorhergehenden Ansprüche, wobei das Ermitteln (33, 38), ob in der Verbrennungskraftmaschine (10) eine Verbrennung stattfindet, umfasst:
Vergleichen der Drehzahl der Verbrennungskraftmaschine (10) bei geöffneter Trennkupplung (13) mit einer vorgegebenen Grenzdrehzahl der Verbrennungskraftmaschine (10); und
Bestimmen, dass in der Verbrennungskraftmaschine (10) keine Verbrennung stattfindet, wenn die Drehzahl der Verbrennungskraftmaschine (10) kleiner als die vorgegebene Grenzdrehzahl ist.

5. Verfahren nach dem Anspruch 4, weiterhin umfassend:
Abschalten (36) der Verbrennungskraftmaschine (10) nach dem Öffnen der Trennkupplung (13); und
Wiederstarten (37) der Verbrennungskraftmaschine (10) bei geöffneter Trennkupplung (13).

6. Verfahren nach Anspruch 4 oder 5, wobei bestimmt wird (33, 38), dass in der Verbrennungskraftmaschine (10) keine Verbrennung stattfindet, wenn die Drehzahl der Verbrennungskraftmaschine (10) nach einer vorgegebenen Zeitspanne nach dem Öffnen der Trennkupplung (13) kleiner als die vorgegebene Grenzdrehzahl ist.

7. Verfahren nach einem der vorhergehenden Ansprüche, wobei, wenn erkannt wird (33, 38), dass in der Verbrennungskraftmaschine keine Verbrennung stattfindet, ein Fahrerinformationssignal erzeugt wird (35), das repräsentiert, dass in der Verbrennungskraftmaschine (10) keine Verbrennung stattfindet.

8. Verfahren nach einem der vorhergehenden Ansprüche, wobei, wenn erkannt wird (33, 38), dass in der Verbrennungskraftmaschine eine Verbrennung stattfindet, die Trennkupplung geschlossen wird (34).

9. Steuervorrichtung zum Erkennen während eines Betriebs eines Hybridfahrzeugs, ob in einer Verbrennungskraftmaschine (10) des Hybridfahrzeugs eine Verbrennung stattfindet, wobei zwischen der Verbrennungskraftmaschine (10) und einer elektrischen Maschine (12) zum Antreiben des Hybridfahrzeugs eine Trennkupplung (13) vorgesehen ist, wobei die Steuervorrichtung (2) dazu ausgebildet ist, ein Verfahren (3, 4) nach einem der vorhergehenden Ansprüche auszuführen.

## Claims

1. Method for identifying, during operation of a hybrid vehicle, whether a combustion is taking place in an internal combustion engine (10) of the hybrid vehicle, wherein a separating clutch (13) is provided between the internal combustion engine (10) and an electric machine (12) for the drive of the hybrid vehicle, comprising:
identifying, in a passive diagnosis with the separating clutch (13) closed, whether a combustion is taking place in the internal combustion engine;
opening (31) the separating clutch between the internal combustion engine (10) and the electric machine (12) if, in the passive diagnosis, it is identified that no combustion is taking place in the internal combustion engine;
receiving (32) a rotational speed signal with the separating clutch (13) open, which represents a rotational speed of the internal combustion engine (10) with the separating clutch (13) open; and
ascertaining (33, 38), on the basis of the rotational speed signal with the separating clutch (13) open, whether a combustion is taking place in the internal combustion engine (10).

2. Method according to Claim 1, wherein the identification, in the passive diagnosis with the separating clutch (13) closed, as to whether a combustion is taking place in the internal combustion engine is performed on the basis of at least one of the following signals:
on the basis of a rotational speed signal with the separating clutch (13) closed, which represents a rotational speed of the internal combustion engine (10) with the separating clutch (13) closed,
on the basis of a lambda signal of a lambda probe with the separating clutch (13) closed, which represents a lambda value of a lambda probe of the hybrid vehicle with the separating clutch (13) closed,
on the basis of a torque signal with the separating clutch (13) closed, which represents a torque of the electric machine (12), and/or
on the basis of an engine temperature.

3. Method according to Claim 1 or 2, wherein the separating clutch (13) is opened (31) if, over one or more successive combustion cycles, it is identified that the indicator for an absence of combustion in the internal combustion engine (10) is present.

4. Method according to any of the preceding claims, wherein the ascertainment (33, 38) as to whether a combustion is taking place in the internal combustion engine (10) comprises:
comparing the rotational speed of the internal combustion engine (10) with the separating clutch (13) open with a predefined threshold rotational speed of the internal combustion engine (10); and
determining that no combustion is taking place in the internal combustion engine (10) if the rotational speed of the internal combustion engine (10) is lower than the predefined threshold rotational speed.

5. Method according to Claim 4, furthermore comprising:
deactivating (36) the internal combustion engine (10) after the opening of the separating clutch (13); and
restarting (37) the internal combustion engine (10) with the separating clutch (13) open.

6. Method according to Claim 4 or 5, wherein it is determined (33, 38) that no combustion is taking place in the internal combustion engine (10) if the rotational speed of the internal combustion engine (10) is lower than the predefined threshold rotational speed after a predefined period of time after the opening of the separating clutch (13).

7. Method according to any of the preceding claims, wherein, if it is identified (33, 38) that no combustion is taking place in the internal combustion engine, a driver information signal is generated (35) which represents that no combustion is taking place in the internal combustion engine (10) .

8. Method according to any of the preceding claims, wherein, if it is identified (33, 38) that a combustion is taking place in the internal combustion engine, the separating clutch is closed (34) .

9. Control device for identifying, during operation of a hybrid vehicle, whether a combustion is taking place in an internal combustion engine (10) of the hybrid vehicle, wherein a separating clutch (13) is provided between the internal combustion engine (10) and an electric machine (12) for the drive of the hybrid vehicle, wherein the control device (2) is designed to carry out a method (3, 4) according to any of the preceding claims.

## Revendications

1. Procédé permettant de repérer pendant un fonctionnement d'un véhicule hybride si une combustion a lieu dans un moteur à combustion interne (10) du véhicule hybride, un embrayage de coupure (13) étant prévu entre le moteur à combustion interne (10) et une machine électrique (12) utilisée pour entraîner le véhicule hybride, comprenant :
le repérage, en cas de diagnostic passif et en cas d'embrayage de coupure fermé (13), de si une combustion a lieu dans le moteur à combustion interne ;
l'ouverture (31) de l'embrayage de coupure entre le moteur à combustion interne (10) et la machine électrique (12) lorsque l'on repère, en cas de diagnostic passif, qu'aucune combustion n'a lieu dans le moteur à combustion interne ;
l'obtention (32) d'un signal de vitesse de rotation en cas d'embrayage de coupure ouvert (13) indiquant une vitesse de rotation du moteur à combustion interne (10) en cas d'embrayage de coupure ouvert (13) ; et
la détermination (33, 38), basée sur le signal de vitesse de rotation en cas d'embrayage de coupure ouvert (13), de si une combustion a lieu dans le moteur à combustion interne (10).

2. Procédé selon la revendication 1, dans lequel le repérage, en cas de diagnostic passif et en cas d'embrayage de coupure fermé (13), de si une combustion a lieu dans le moteur à combustion interne est réalisé sur la base d'au moins un des signaux suivants :
sur la base d'un signal de vitesse de rotation en cas d'embrayage de coupure fermé (13) qui indique la vitesse de rotation du moteur à combustion interne (10) en cas d'embrayage de coupure fermé (13) ;
sur la base d'un signal lambda d'une sonde lambda en cas d'embrayage de coupure fermé (13) qui indique une valeur lambda d'une sonde lambda du véhicule hybride en cas d'embrayage de coupure fermé (13) ;
sur la base d'un signal de couple de rotation en cas d'embrayage de coupure fermé (13) qui indique un couple de rotation de la machine électrique (12) ; et/ou sur la base d'une température de moteur.

3. Procédé selon la revendication 1 ou 2, dans lequel l'embrayage de coupure (13) est ouvert (31) lorsque l'on repère, via un ou plusieurs cycles de combustion successifs, que l'indicateur d'absence de combustion manquante est présent dans le moteur à combustion interne (10).

4. Procédé selon l'une quelconque des revendications précédentes, dans lequel la détermination (33, 38) de si une combustion a lieu dans le moteur à combustion interne (10) comprend :
la comparaison de la vitesse de rotation du moteur à combustion interne (10) en cas d'embrayage de coupure ouvert (13) avec une vitesse de rotation limite prédéfinie du moteur à combustion interne (10) ; et
la détermination qu'aucune combustion n'a lieu dans le moteur à combustion interne (10) lorsque la vitesse de rotation du moteur à combustion interne (10) est inférieure à la vitesse de rotation limite prédéfinie.

5. Procédé selon la revendication 4, comprenant en outre :
la déconnexion (36) du moteur à combustion interne (10) après l'ouverture de l'embrayage de coupure (13) ; et le redémarrage (37) du moteur à combustion interne (10) en cas d'embrayage de coupure ouvert (13).

6. Procédé selon la revendication 4 ou 5, dans lequel il est défini (33, 38) qu'aucune combustion n'a lieu dans le moteur à combustion interne (10) lorsque la vitesse de rotation du moteur à combustion interne (10) est inférieure à la vitesse de rotation limite prédéfinie après un intervalle de temps prédéfini après l'ouverture de l'embrayage de coupure (13).

7. Procédé selon l'une quelconque des revendications précédentes, dans lequel lorsqu'il est repéré (33, 38) qu'aucune combustion n'a lieu dans le moteur à combustion interne, un signal d'information du conducteur est produit (35) qui indique qu'aucune combustion n'a lieu dans le moteur à combustion interne (10) .

8. Procédé selon l'une quelconque des revendications précédentes, dans lequel lorsqu'il est repéré (33, 38) qu'une combustion a lieu dans le moteur à combustion interne, l'embrayage de coupure est fermé (34).

9. Dispositif de commande permettant de repérer, pendant un fonctionnement d'un véhicule hybride, si une combustion a lieu dans un moteur à combustion interne (10) du véhicule hybride, un embrayage de coupure (13) étant prévu entre le moteur à combustion interne (10) et une machine électrique (12) pour entraîner le véhicule hybride, le dispositif de commande (2) étant réalisé pour mettre en œuvre un procédé (3, 4) selon l'une quelconque des revendications précédentes.
